(19) Europäisches Patentamt European Patent Office Office européen des brevets

(11) **EP 3 026 740 B1**

(12) **EUROPEAN PATENT SPECIFICATION**

(45) Date of publication and mention of the grant of the patent:
**17.06.2020 Bulletin 2020/25**

(51) Int Cl.:
*H01M 4/525* (2010.01)    *C01G 53/00* (2006.01)
*H01M 4/505* (2010.01)    *H01M 4/02* (2006.01)
*H01M 10/0525* (2010.01)

(21) Application number: **14830084.1**

(22) Date of filing: **22.07.2014**

(86) International application number:
**PCT/JP2014/069372**

(87) International publication number:
**WO 2015/012283 (29.01.2015 Gazette 2015/04)**

(54) **NON-AQUEOUS ELECTROLYTE SECONDARY BATTERY POSITIVE ELECTRODE ACTIVE MATERIAL AND METHOD FOR MANUFACTURING SAME, AND NON-AQUEOUS ELECTROLYTE SECONDARY BATTERY**

AKTIVMATERIAL FÜR POSITIVE ELEKTRODEN EINER SEKUNDÄRBATTERIE MIT WASSERFREIEM ELEKTROLYT UND VERFAHREN ZUR HERSTELLUNG DAVON SOWIE SEKUNDÄRBATTERIE MIT WASSERFREIEM ELEKTROLYT DAMIT

MATÉRIAU ACTIF D'ÉLECTRODE POSITIVE DE BATTERIE SECONDAIRE À ÉLECTROLYTE NON AQUEUX ET SON PROCÉDÉ DE FABRICATION, ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2013 JP 2013153890**

(43) Date of publication of application:
**01.06.2016 Bulletin 2016/22**

(73) Proprietor: **Sumitomo Metal Mining Co., Ltd.**
**Tokyo, 105-8716 (JP)**

(72) Inventors:
• **ODA, Shuhei**
**Niihama-shi**
**Ehime 792-0002 (JP)**
• **TOYA, Hiroyuki**
**Niihama-shi**
**Ehime 792-0002 (JP)**

• **INOUE, Katsuya**
**Niihama-shi**
**Ehime 792-0002 (JP)**

(74) Representative: **Moreland, David**
**Marks & Clerk LLP**
**Aurora**
**120 Bothwell Street**
**Glasgow G2 7JS (GB)**

(56) References cited:
**EP-A1- 2 469 630**    **WO-A1-2011/074058**
**WO-A1-2011/161755**    **WO-A1-2012/131881**
**WO-A1-2012/169274**    **JP-A- H10 308 218**
**JP-A- 2004 335 278**    **JP-A- 2012 018 925**
**JP-A- 2013 051 172**    **JP-A- 2013 051 772**
**JP-A- 2013 206 552**    **JP-A- 2014 135 273**

**Description**

TECHNICAL FIELD

The present invention relates to a cathode active material for a non-aqueous electrolyte secondary battery and manufacturing method thereof, and to a non-aqueous electrolyte secondary battery that uses that cathode active material as cathode material.

BACKGROUND ART

In recent years, with the spread of portable electronic devices such as portable telephones, notebook personal computers and the like, there is a large need for development of compact and lightweight secondary batteries having a high energy density. Moreover, there is a large need for high-output secondary batteries as the batteries for power supplies of motor drives, and particularly for power supplies for transport equipment.

As a secondary battery that satisfies such a demand is a lithium-ion secondary battery that is one kind of a non-aqueous electrolyte secondary battery. This lithium-ion secondary battery includes an anode, a cathode, an electrolyte and the like, and a material for which extraction and insertion of lithium is possible is used as the active material that is used as the material for the anode and cathode.

Currently, much research is being performed for various kinds of lithium-ion batteries, and of that research, a lithium-ion secondary battery in which a layered-type or spinel-type lithium composite metal oxide is used as the cathode material is capable of obtaining a high 4V class voltage, so development and application thereof as a battery having high energy density are being advanced.

Currently, as the cathode material for this kind of lithium-ion secondary battery, lithium composite oxides such as lithium cobalt composite oxide ($LiCoO_2$) for which synthesis is comparatively easy, lithium nickel composite oxide ($LiNiO_2$) in which nickel that is less expensive than cobalt is used, lithium nickel cobalt manganese composite oxide ($LiNi_{1/3}Co_{1/3}Mn_{1/3}O_2$), lithium manganese composite oxide ($LiMn_2O_4$) that uses manganese, lithium nickel manganese composite oxide ($LiNi_{0.5}Mn_{0.5}O_2$), and the like are proposed. Of these, lithium nickel cobalt manganese composite oxide is gaining attention as a cathode material that has good cycling characteristics, low resistance, and from which high output can be obtained. Moreover, tests for increasing the performance by introducing various additional elements into this lithium nickel cobalt manganese composite oxide are being performed.

On the other hand, research that focuses on the crystal state of these kinds of lithium composite oxides is also being performed. For example, JP H05258751 (A), JP H09022693 (A) and JP H08055624 (A) disclose a lithium composite oxide for which the cycling characteristics have been improved by regulating the ratio of the diffraction peak intensity ($I_{(003)}$) at plane (003) and the diffraction peak intensity ($I_{(104)}$) at plane (104) of the Miller indices (hkl) in powder X-ray diffraction that uses CuK$\alpha$ rays to be within a specified range.

Moreover, JP H10308218 (A) proposes a lithium composite oxide for which it is possible to obtain both improved thermal stability and cycling characteristics when charging the lithium-ion secondary battery by regulating the crystallite size that is calculated from plane (003) using the Shellar formula and the crystallite size that is calculated from plane (110) using the Shellar formula to be within a specified range.

Furthermore, JP 2000195514 (A) proposes lithium cobalt manganese composite oxide of a trigonal system having layer structure for which the growth direction of crystal is controlled, and large-current discharge is improved by regulating the ratio of the half peak width ($FWHM_{(003)}$) of the diffraction peak at plane (003) with respect to the half peak width ($FWHM_{(104)}$) of the diffraction peak at plane (104) ($FWHM_{(003)}/FWHM_{(104)}$), and the ratio of the integrated intensity ($I_{(104)}$) of the diffraction peak at plane (104) with respect to the integrated intensity ($I_{(003)}$) of the diffraction peak at plane (003) ($I_{(104)}/I_{(003)}$) to be within specified ranges.

However, in these documents, even though the cycling characteristics and thermal stability of the obtained lithium-ion secondary battery are improved by regulating the half peak width on a specified crystal plane (full width at half maximum) and the crystallite size of lithium composite oxide, improvement of the output characteristics has not been sufficiently examined. Particularly, it is known that in a low-temperature environment that the output characteristics of a lithium-ion secondary battery greatly decrease, and it is considered difficult for the lithium composite oxide of these documents to be used in such a condition. On the other hand, with the recent worldwide spread of portable electronics and electric automobiles, it is presumed that lithium-ion batteries that are used in these devices will be used in severe environments such as in cold regions, so there is a need for further improvement of the output characteristics in low-temperature environments.

For example, JP 2013051772 (A) proposes a lithium-ion secondary battery that is capable of high-output characteristics even in extremely low-temperature environments such as at -30°C in a low-charged state by making the cathode active material have a hollow structure and controlling the $FWHM_{(003)}/FWHM_{(104)}$ value to be 0.7 or less. In this document, it is disclosed that this kind of cathode active material can be obtained by mixing a transition metal hydroxide crystallized under specified condition with a lithium compound, then performing calcination in an oxidizing atmosphere for 3 hours to 20 hours at a maximum calcination temperature of 700°C to 1000°C.

However, the diffraction peak is such that the peak position shifts due to change in the crystallinity and composition, so evaluation using the half peak width (FWHM) is only a relative evaluation, and performing a highly reliable evaluation of the crystallinity of cathode active material using this is difficult.

[Related Literature]

[Patent Literature]

[Patent Literature 1] JP H05258751 (A)
[Patent Literature 2] JP H09022693 (A)
[Patent Literature 3] JP H08055624 (A)
[Patent Literature 4] JP H10308218 (A)
[Patent Literature 5] JP 2000195514 (A)
[Patent Literature 6] JP 2013051172 (A)

JP 2013051772 A (TOYOTA MOTOR CORP) discloses a power supply connector, vehicle and control method therefore. The power supply connector, used in supplying electric power from a hybrid vehicle equipped with an engine and motor generators to the outside of the vehicle, when connected with an inlet of the vehicle, outputs a signal for allowing an ECU of the vehicle to execute feeding operations while permitting the operation of the engine.

WO 2011/074058 A1 (TOYOTA MOTOR CO LTD) discloses a positive electrode active material for a lithium secondary batter and use thereof. Disclosed is a process for producing a positive electrode active material for a lithium secondary battery, wherein the positive electrode active material comprises a lithium-nickel-cobalt-manganese complex oxide having a lamellar structure. The process comprises the following steps (1) to (3): (1) providing a starting raw material for producing the composite oxide, wherein the starting raw material comprises a lithium source, a nickel source, a cobalt source and a manganese source; (2) heating the starting raw material at a pre-firing temperature that is set at a temperature lower than 800°C and higher than the melting temperature of the lithium source, thereby pre-firing the starting raw material; and (3) heating a pre-fired product produced in the pre-firing step mentioned above at a temperature higher than the pre-firing temperature, thereby firing the pre-fired product.

SUMMARY OF INVENTION

[Problem to be Solved by Invention]

An object of the present invention is to provide a cathode active material for a non-aqueous electrolyte secondary battery that is capable of improving the output characteristics of a lithium-ion secondary battery, and particularly the output characteristics when used in a low-temperature environment. Moreover, an object of the present invention is to provide a method for easily manufacturing this kind of cathode active material on an industrial scale.

[Means for Solving Problems]

The inventors, in order to solve the problems described above, diligently studied the effect that the crystal structure and powder characteristics of lithium nickel cobalt manganese composite oxide particles, which is a cathode active material for a non-aqueous electrolyte secondary battery have on the cathode resistance of a secondary battery. As a result, it was learned that by controlling the ratio of crystallite sizes calculated from specified crystal surfaces of the lithium nickel cobalt manganese composite oxide obtained from the X-ray diffraction results, it is possible to reduce the cathode resistance while maintaining high capacity when used as the cathode of a secondary battery. At the same time, it was learned that the crystallite size can be controlled according to calcination conditions when forming lithium nickel cobalt manganese composite oxide.

According to an aspect of the present invention there is provided a cathode active material for a non-aqueous electrolyte the second battery according to the appended claims. (0 < [crystallite size at plane (104)/crystallite size at plane (003)] < 0.60).

Preferably, the crystallite size that is found from the half peak width of the diffraction peak at plane (003) is in the range of 80 nm to 140 nm, and the crystallite size that is found from the half peak width of the diffraction peak at plane (104) is in the range of 40 nm to 80 nm.

Moreover, preferably, the average particle size of the secondary particles is 3 μm to 20 μm.

Furthermore, preferably, the index [(d90 - d10)/average particle size] that indicates the spread of the particle size distribution of the secondary particles is 0.60 or less.

According to another aspect of the present invention there is provided a manufacturing method for producing a cathode active material for a non-aqueous electrolyte secondary battery according to the appended claims.

Preferably, in the calcination process, the overall calcination time from the start of temperature rise to the end of calcination is 3.0 hours to 9.0 hours.

Preferably, in the crystallization process, nickel cobalt manganese composite hydroxide particles is obtained of which the average particle size is in the range of 3 μm to 20 μm, and the index [(d90 -d10)/average particle size] that indicates the spread of the particle size distribution of the secondary particles is 0.60 or less.

Preferably, there is a heat-treatment process before the mixing process for heat treating the nickel cobalt manganese composite hydroxide particles at a temperature in the range of 105°C to 400°C.

Furthermore, preferably there is a crushing process for crushing the lithium nickel cobalt manganese composite oxide particles obtained in the calcination process.

The non-aqueous electrolyte secondary battery of the present invention comprises a cathode, an anode, a separator, and a non-aqueous electrolyte, and uses the cathode active material for a non-aqueous electrolyte of the present invention as the cathode material of the cathode.

[Effect of Invention]

With the present invention, it is possible to provide a non-aqueous electrolyte secondary battery that has high capacity, and that also has excellent output characteristics in low-temperature environments. Moreover, with the present invention, a cathode active material for a non-aqueous electrolyte secondary battery having such excellent characteristics can be produced easily and on a large scale. Therefore, the industrial significance of the present invention is very large.

BRIEF DESCRIPTION OF DRAWINGS

FIG. 1 is a graph illustrating the results of particle size distribution measurement of the cathode active material of Example 1 of the present invention; and
FIG. 2 schematically illustrates the cross section of a coin cell that was used in the battery evaluation of the present invention.

MODES FOR CARRYING OUT INVENTION

1. Cathode Active Material for a Non-aqueous Electrolyte Secondary Battery (1) Composition

The cathode active material for a non-aqueous electrolyte secondary battery of the present invention (hereafter, referred to as "cathode active material") includes lithium nickel cobalt manganese composite oxide particles (hereafter, referred to as "lithium composite oxide particles"). The composition of the lithium composite oxide particles is expressed by the general formula (A): $Li_{1+s}Ni_xCo_yMn_zM_tO_2$ (where $-0.05 \le s \le 0.20$, $x + y + z + t = 1$, $0.3 \le x \le 0.7$, $0.1 \le y \le 0.4$, $0.1 \le z \le 0.4$, $0 \le t \le 0.05$, and M is one or more element selected from among Ca, Mg, Al, Ti, V, Cr, Zr, Nb, Mo, Hf, Ta, and W).

In the cathode active material of the present invention, the value of "s" that expresses the excess amount of lithium (Li) is no less than -0.05 and no greater than 0.20, and preferably is no less than 0 and no greater than 0.20, and even more preferably is greater than 0 but no greater than 0.15. When the value of "s" is less than -0.05, the cathode resistance of the non-aqueous electrolyte secondary battery that uses this cathode active material increases, and the output characteristics cannot be improved. On the other hand, when the value of "s" is greater than 0.20, the initial discharge capacity of the non-aqueous electrolyte secondary battery that uses this cathode active material decreases, and the cathode resistance increases, so similarly, the output characteristics cannot be improved.

Nickel (Ni) is an element that contributes to the improvement of battery capacity. The value of "x" that expresses the nickel content is no less than 0.3 and no greater than 0.7, and preferably is no less than 0.4 and no greater than 0.6. When the value of "x" is less than 0.3, the battery capacity of the non-aqueous electrolyte secondary battery that uses this cathode active material decreases. On the other hand, when the value of "x" is greater than 0.7, the content of other additional elements decreases, so there is a possibility that the effect from adding elements cannot be sufficiently obtained.

Cobalt (Co) is an element that contributes to improvement of cycling characteristics. The value of "y" that expresses the cobalt content is no less than 0.1 and no greater than 0.4, and preferably is no less than 0.2 and no greater than 0.35. When the cobalt content is within this kind of range, the cathode active material has good cycling characteristics, or in other words, has high durability. When the value of "y" is less than 0.1, it is not possible to obtain sufficient cycling characteristics, and capacity retention decreases. On the other hand, when the value of "y" is greater than 0.4, the initial electric discharge capacity greatly decreases.

Manganese (Mn) is an element that contributes to the improvement of thermal stability. The value "z" that expresses the manganese content is no less than 0.1 and no greater than 0.4, and preferably is no less than 0.2 and no greater than 0.3. When the value of "z" is less than 0.1, the effect of adding manganese cannot be sufficiently obtained. On the other hand, when the value of "z" is greater than 0.4, the battery capacity of the non-aqueous electrolyte battery that uses this cathode active material decreases.

In addition, the cathode active material of the present invention can also include additional elements (M) in the lithium composite oxide particles. As a result, it is possible to improve the durability and output characteristics of a secondary battery that uses this cathode active material.

As such additional elements (M), it is possible to use one or more element that is selected from among calcium (Ca), magnesium (Mg), aluminum (Al), titanium (Ti), vanadium (V), chromium (Cr), zirconium (Zr), niobium (Nb), molybdenum (Mo), hafnium (Hf), tantalum (Ta), and tungsten (W). These additional elements (M) are appropriately selected according to the usage and desired performance of the secondary battery that uses the obtained cathode active material.

The value of "t" that expresses the content of additional elements (M) is no less than 0 and no greater than 0.05, and preferably is no less than 0.0003 but no greater than 0.05, and more preferably is no less than 0.001 and no greater than 0.01. Adding additional elements (M) is arbitrary, however, when added, from the aspect of improving the durability and output characteristics of the non-aqueous electrolyte secondary battery that uses this cathode active material, preferably the value of "t" is no less than 0.0003. On the other hand, when the value of "t" is greater than 0.05, the metal elements that contribute to the Redox reaction decrease, so the battery capacity decreases.

In a crystallization process that will be described later, the additional elements (M) are crystallized together with the nickel, cobalt and manganese, and can be evenly dispersed in the nickel cobalt manganese composite hydroxide particles (hereafter, referred to as "composite hydroxide particles"), however, it is also possible to cover the surface of the composite hydroxide particles with the additional elements (M) after the crystallization process. Moreover, it is also possible to mix the additional elements (M) together with the composite hydroxide particles with the lithium compound in a mixing process, and it is also possible to use these methods together. No matter which method is used, the content of the additional elements (M) must be adjusted so as to obtain the composition of general formula (A).

(2) Crystal Structure

[Crystallite Size Ratio at Plane (104)]

The lithium composite oxide particles of the cathode active material of the present invention are such that the ratio of the crystallite size found from the half peak value (half peak width: FWHM) of the diffraction peak at plane (104) (hereafter, referred to as the "crystallite size at plane (104)") with respect to the crystallite size found from the half peak width of the diffraction peak at plane (003) (hereafter, referred to as the "crystallite size of plane (003)") of the Miller indices (hkl) in powder X-ray diffraction that uses CuKα rays is greater than 0 and less than 0.60, and preferably is no less than 0.35 and no greater than 0.55, and more preferably is no less than 0.35 and no greater than 0.50; and have a layered structure. In other words, the cathode active material of the present invention satisfies at least Equation (1) below:

$$0 < [\text{crystallite size at plane (104)/ crystallite size at plane (003)}] < 0.60 \quad (1)$$

Here, the crystallite size is a dimension that indicates the average size of single crystals of the lithium composite oxide crystals, and is an index of the crystallinity. The crystallite size can found using X-ray diffraction (XRD) measurement and calculated by calculation using the following Scherrer formula.

<Scherrer Formula>

Crystallite size $(\text{Å}) = 0.9\ \lambda/(\beta\cos\theta)$

λ: Wavelength of the X-ray tube used (CuKα = 1.542 A)
β: Half peak width of the diffraction peak of the plane
θ: Diffraction angle

The crystal structure of the lithium composite oxide particles of the present invention is a layered structure of hexagonal crystals. In this case, the lithium ions are absorbed into the lithium composite oxide particles and released from the particles in a direction that is orthogonal to the c-axis of the hexagonal crystals. Here, plane (003) of the Miller indices in powder X-ray diffraction that uses $CuK\alpha$ rays relates to the c-axis direction of the hexagonal crystals. Moreover, plane (104) relates to the direction that is orthogonal to the c-axis of the hexagonal crystals. Therefore, when the crystal growth in the direction that is orthogonal to the c-axis is suppressed, or in other words, when the value of the [crystallite size at plane (104)/crystallite size at plane (003)] (hereafter, referred to as the "crystallite size ratio at plane (104)") is less than 0.60, and preferably 0.55 or less, and more preferably 0.50 or less, and even more preferably 0.47 or less, the diffusion length for the lithium ions becomes short, and the cathode resistance decreases, so it is considered to be possible to improve the output characteristics of the secondary battery.

On the other hand, when the crystallite size ratio at plane (104) is 0.60 or greater, crystal growth in the direction orthogonal to the c-axis proceeds, and the diffusion length for lithium ions become long, so the output characteristics of the secondary battery decrease. Particularly, in low-temperature environments (near 0°C) where the diffusion rate of lithium ions decreases, that difference becomes prominent, and the output characteristics of the secondary battery greatly decrease. On the other hand, in order to improve the output characteristics of the secondary battery, a smaller crystallite size ratio at plane (104) of the lithium composite oxide particles of the cathode active material is advantageous, so the lower limit is not limited. However, when the crystallite size ratio at plane (104) becomes too small, crystallinity decreases and the battery characteristics may worsen. Therefore, in consideration of this, including the production restrictions, preferably a value of 0.35 or greater is practical.

In JP 2013051172 (A), the half peak width (FWHM) of the diffraction peak is used when evaluating crystal growth, however, as described above, when performing evaluation using the half peak width, which is a value that is half the diffraction peak intensity, there is a problem in that the peak position shifts due to change in the crystallinity and composition. In regard to this, in evaluation using the crystallite size ratio at plane (104), the crystallinity is evaluated using the crystallite size that is found by also taking the peak position into consideration, so the problem described above does not occur, and it is possible to find a highly reliable relationship.

[Crystallite Size at Plane (104) and Crystallite Size at Plane (003)]

For the lithium composite oxide particles of the cathode active material of the present invention, together with controlling the crystallite size ratio at plane (104) to be within the range described above, preferably the crystallite size at plane (104) is controlled to be 40 nm to 80 nm, and the crystallite size at plane (003) is controlled to be 80 nm to 140 nm. As a result, it is possible to make a cathode active material with good crystallinity, and excellent charging and discharging capacity and cycling characteristics are achieved for a secondary battery that uses that cathode active material as the cathode material. In regard to this, when the crystallite size at plane (003) and the crystallite size at plane (104) become smaller than in the range described above, the crystallinity of the lithium composite oxide particles decreases and the battery characteristics of the secondary battery may worsen. On the other hand, when the crystallite size at plane (003) and the crystallite size at plane (104) become larger than in the range described above, the diffusion length for the lithium ions in the lithium composite oxide particles becomes long, so the output characteristics of the secondary battery may decrease.

In order to improve the battery characteristics, preferably the crystallite size at plane (104) is controlled to be 40 nm to 75 nm, and more preferably controlled to be 40 nm to 70 nm. Moreover, preferably the crystallite size at plane (003) is controlled to be 100 nm to 130 nm, and more preferably controlled to be 105 nm to 130 nm.

(3) Particle Structure

The cathode active material of the present invention includes spherical shaped secondary particles that are formed by an aggregation of plural primary particles. The shape of the primary particles of the secondary particles can take on various shapes such as plate shaped, needle shaped, rectangular parallelepiped shaped, elliptical shaped, polyhedron shaped and the like, and the aggregate form as well can be aggregation in a random direction, or the present invention can also be applied to the case of aggregation in the major axis direction of the particles from the center in a fan-like shape. However, in order to improve the packing density of the cathode active material obtained, preferably the secondary particles have a spherical shape. The shape of the primary particles and the secondary particles, and the structure of the secondary particles can be confirmed by embedding secondary particles in resin or the like, then using a cross-section polisher or the like to make it possible to observe the cross section, and then performing observation of the cross section using a scanning electron microscope (SEM).

Secondary particles such as these sufficiently include interfaces or grain boundaries between the primary particles of the secondary particles where electrolyte can penetrate. Therefore, it is possible for the electrolyte to efficiently penetrate to the surface of primary particles where the lithium ions are released or inserted, and thus it becomes possible to greatly improve the output characteristics by a synergistic effect of controlling the crystallite size ratio and crystallite size at plane (104) as described above. Such secondary particles can be easily obtained by a crystallization process that will be described later.

(4) Average Particle Size

The average particle size of the cathode active material of the present invention is preferably 3 $\mu$m to 20 $\mu$m. Here, the average particle size means the volume-average particle size (MV) that is found by the laser diffraction scattering method.

When the average particle size is less than 3 $\mu$m, the packing density of the lithium composite oxide particles when forming the cathode decreases, and thus the battery capacity per volume of the cathode may decrease. Moreover, there may be excessive reaction with the electrolyte, and thus safety may decrease. On the other hand, when the average particle size is greater than 20 $\mu$m, the specific surface area of the cathode active material decreases and the grain interfaces with the electrolyte are reduced, so the cathode resistance may rise and the output characteristics of the secondary battery may decrease.

From the aspect of improving the output characteristics of the battery, preferably the average particle size is 3 $\mu$m to 10 $\mu$m, and more preferably 3 $\mu$m to 8 $\mu$m.

(5) Particle Size Distribution

When the particle size distribution of secondary particles of the cathode active material is large, there are many minute particles having a very small particle size with respect to the average particle size, or coarse particles having a very large particle size with respect to the average particle size that exist in the cathode active material. When a cathode is formed using cathode active material in which there are many minute particles, the battery may generate heat due to localized reaction with the minute particles, so not only is there a possibility that the safety could decrease, but the minute particles could selectively degrade, and the cycling characteristics could worsen. On the other hand, when a cathode is formed using cathode active material in which there are many coarse particles, it is not possible to maintain a sufficient reaction surface area between the electrolyte and the cathode active material, so the cathode resistance increases, and there is a possibility that the output characteristics could decrease. Particularly, when the average particle size of the cathode active material is small, there is a tendency for the percentage of minute particles and coarse particles to increase, so it is necessary to suitably control the particle size distribution.

More specifically, when the average particle size of the cathode active material of the present invention is controlled to be 3 $\mu$m to 20 $\mu$m, the index [(d90 - d10)/average particle size] which indicates the spread of the particle size distribution is preferably controlled to be no greater than 0.60, and more preferably no greater than 0.55, and even more preferably is controlled to be within the range of 0.30 to 0.45. As a result, mixing of minute particles and coarse particles is suppressed, and it becomes possible to maintain the safety and output characteristics of the secondary battery. The value of [(d90 - d10)/average particle size] can be found from the particle sizes per cumulative volume (d90, d10) and the volume average particle size (MV) that are found by using a laser diffraction scattering method.

(6) Specific Surface Area

The specific surface area of the cathode active material of the present invention is preferably 0.3 m$^2$/g to 2.5 m$^2$/g, and more preferably 0.5 m$^2$/g to 2.0 m$^2$/g. When the specific surface area is less than 0.3 m$^2$/g, it may not be possible to sufficiently maintain the reaction surface area with the electrolyte. On the other hand, when the specific surface area is greater than 2.5 m$^2$/g, there may be excessive reaction with the electrolyte, and thus safety may decrease. The specific surface area can be measured by the BET method using nitrogen gas adsorption.

2. Method for Manufacturing Cathode Active Material for a Non-aqueous Electrolyte Secondary Battery

The method for manufacturing the cathode active material of the present invention includes: a crystallization process for obtaining composite hydroxide particles; a mixing process of obtaining a lithium mixture by adding a lithium compound to the composite hydroxide particles and mixing; and a calcination process of obtaining lithium composite oxide particles by performing calcination of the lithium mixture in an oxidizing atmosphere. Furthermore, before the mixing process, it is also possible to add a heat-treatment process of heat treating the composite hydroxide particles, and it is possible to add a crushing process of crushing the lithium composite oxide particles that were obtained in the calcination process. Each of the processes will be explained below.

(1) Crystallization Process

The crystallization process is a process of obtaining composite hydroxide particles that can be expressed by the general formula (B): $Ni_xCo_yMn_zM_t(OH)_{2+\alpha}$ (where $x + y + z + t = 1$, $0.3 \leq x \leq 0.7$, $0.1 \leq y$ $0.4$, $0.1 \leq z \leq 0.4$, $0 \leq t \leq 0.01$, and M is one or more element selected from among Mg, Ca, Al, Ti, V, Cr, Zr, Nb, Mo, Hf, Ta, and W).

The crystallization process is not particularly limited, and any known crystallization process can be used, and by controlling the conditions of the crystallization process, it is possible to adjust the particle size and shape of the obtained composite hydroxide particles.

For example, an aqueous solution that includes a compound of nickel, cobalt and manganese having ratios expressed by the general formula (B), or a compound of those elements and additional elements (M) is supplied as a mixed aqueous solution, or separate aqueous solutions that include these compounds are separately supplied to a reaction tank. At the same time, by supplying an aqueous solution that includes an ammonium ion donor and a sodium hydroxide aqueous solution, a reaction aqueous solution is formed in the reaction tank, and the pH value of that reaction aqueous solution is controlled to be in the range of 10.5 to 11.6 at a reference liquid temperature of 25°C. After that, the composite hydroxide particles that were generated inside the reaction tank are recovered using a continuous crystallization method or a batch crystallization method. Next, the recovered composite hydroxide particles are washed to remove any impurities, and dried. The composite hydroxide particles that are obtained using this kind of crystallization method include a form of spherical secondary particles formed by an aggregation of primary particles.

As the preferable form of the present invention is a cathode active material having an average particle size of 3 $\mu$m to 20 $\mu$m, and an index [(d90 - d10)/average particle size] that indicates the spread of the particle size distribution of 0.60 or less. In order to obtain this kind of cathode active material, the precursor composite hydroxide particles are preferably produced by a batch crystallization method in which the nucleation step and the particle growth step are clearly separated (hereafter, referred to as a nucleation-separated crystallization method).

Here, the nucleation-separated crystallization method is a method for producing composite hydroxide particles having a narrow particle size distribution by clearly separating the nucleation process and particle growth process by individually controlling the pH value of the reaction solution in the nucleation step and the particle growth step. More specifically, this is a method for producing composite hydroxide particles having a narrow particle size distribution by performing nucleation (nucleation process) by controlling the nucleation aqueous solution that includes a metal compound and ammonium ion donor so that the pH value at a reference liquid temperature of 25°C is 12.0 to 14.0, and preferably 12.0 to 13.0, and then causing the nuclei to grow (particle growth process) by controlling the particle growth aqueous solution that includes the nuclei that where formed in the nucleation process so that the pH value at a reference liquid temperature of 25°C is 10.5 to 12.0, and preferably 10.3 to 11.5.

The particle size of the composite hydroxide particles that are obtained by this kind of method can be controlled by the crystallization conditions such as the pH value and amount of nucleation in the nucleation process, and/or the reaction time in the particle growth process and the like. Moreover, by controlling the power required for stirring per unit volume of reaction solution, it is possible to control the particle size, for example, the particle size can be made large by making the power required for stirring small.

By controlling the crystallization conditions as described above, it is possible to obtain composite hydroxide particles having a narrow particle size distribution, while controlling the average particle size to be within a specified range.

(2) Heat-treatment Process

In the manufacturing method of the present invention, it is also possible to heat treat the composite hydroxide particles after the crystallization process and before the mixing process, and then mix the heat-treated particles with a lithium compound. Here, the heat-treated particles include not only composite hydroxide particles from which the excess moisture was removed in the heat-treatment process, but also includes nickel cobalt manganese composite oxide particles (hereafter, referred to as "composite oxide particles") that were transformed to oxide particles in the heat-treatment process, or a mixture of these.

The heat-treatment process is a process for removing moisture that is included in the composite hydroxide particles by heating and processing the composite hydroxide particles to a temperature of 105°C to 400°C. As a result, moisture that remains in the particles until the calcination process can be reduced to a fixed amount, so it is possible to prevent variation in the percentage of the number of atoms in each of the metal components in the obtained cathode active material and the number of lithium atoms, and to stabilize the ratio of the number of lithium atoms (Li/Me).

In the heat-treatment process enough moisture is removed so that variation in the percentage of the number of atoms of each of the metal components and number of lithium atoms in the cathode active material does not occur, so it is not absolutely necessary to transform all of the composite hydroxide particles to composite oxide particles. However, in order to further reduce variation in the percentage of the number of atoms of each of the metal components and number of lithium atoms, preferably all of the composite hydroxide particles are transformed to composite oxide particles by heating the particles in a condition equal to or greater than the decomposition condition for the nickel cobalt manganese composite hydroxide.

The heating temperature in the heat-treatment process is 105°C to 400°C, and preferably 120°C to 400°C. When the heating temperature is less than 105°C, it is not possible to remove the excess moisture in the composite hydroxide particles, so it may not be possible to sufficiently suppress variation. On the other hand, even when the heating temperature is greater than 400°C, not only can no more effect be expected, but the production cost increases. It is possible to suppress the variation described above by finding through analysis each of the metal components included in the heat-treated particles according to the heat-treatment conditions, and setting the ratio of lithium compound.

The atmosphere in which heat treatment is performed is not particularly limited as long as the atmosphere is a non-reducing atmosphere, however, preferably heat treatment is performed in a simple airflow.

Moreover, the heat-treatment time is also not particularly limited, however, when the time is less than 1 hour, it may not be possible to sufficiently remove the excess moisture in the composite hydroxide particles. Therefore, preferably the heat-treatment time is at least 1 hour or more, and more preferably 5 hours to 15 hours.

The equipment that is used in this kind of heat treatment is not particularly limited as long as it is possible to heat composite hydroxide particles in a non-reducing atmosphere and preferably in a flow of air; however, an electric furnace that does not generate gas can be suitably used.

When mixing lithium compound with composite hydroxide particles or heat-treated particles, the lithium compound is mixed with composite hydroxide particles or heat-treated particles so that the ratio (Li/Me) of the number of lithium atoms (Li) with respect to the total number of metal atoms (Me) is 0.95 to 1.20, and preferably 1.00 to 1.20, and more preferably greater than 1.00 but no greater than 1.15. In other words, Li/Me does not change before or after the calcination process, so the lithium compound must be mixed with composite hydroxide particles or heat-treated particles so that the Li/Me ratio of the lithium mixture that is obtained in the mixing process becomes the Li/Me ratio of the target cathode active material.

The lithium compound that is mixed with the composite hydroxide particles or heat-treated particles is not particularly limited, however, in consideration of the ease of procurement, it is suitably possible to use lithium hydroxide, lithium nitrate, lithium carbonate or a mixture of these. Particularly, when considering the ease of handling, or the stability of product quality, preferably lithium hydroxide or lithium carbonate is used, and more preferably lithium carbonate is used.

The lithium mixture is preferably mixed sufficiently before calcination. When the mixing is not sufficient, variation may occur in the Li/Me ratio among individual particles, and it may not be possible to obtain sufficient battery characteristics.

Moreover, for mixing, it is possible to use a typical mixer, for example, it is possible to use a shaker mixer, a V blender, a ribbon mixer, a Julia mixer, Loedige mixer or the like. No matter what mixer is used, the composite hydroxide particles or the heat-treated particles should be sufficiently mixed to an extent that the shapes of the composite hydroxide particles or heat-treated particles are not damaged.

In the mixing process, it is also possible to mix in additional elements (M) together with the lithium compound. Alternatively, as described above, the lithium compound can be mixed in after the surface of the composite hydroxide particles or composite oxide particles have been coated with the additional elements (M). Furthermore, these methods can be used together. In any case, it is necessary that the additional elements (M) be appropriately adjusted so that the composition of general formula (A) is obtained.

(4) Pre-calcination Process

When lithium hydroxide or lithium carbonate is used as the lithium compound, a pre-calcination of the lithium mixture is performed after the mixing process and before the calcination process at a temperature (pre-calcination temperature) of preferably no less than 350°C but less than 650°C, and more preferably 450°C to 600°C. In other words, preferably pre-calcination is performed at the reaction temperature of lithium hydroxide or lithium carbonate, and the nickel cobalt manganese composite oxide. As a result, dispersion of lithium into the heat-treated particles is promoted, and it is possible to obtain more uniform lithium composite oxide particles.

When doing this, the mixture is preferably maintained at the pre-calcination temperature for 1 hour to 10 hours, and more preferably 3 hours to 6 hours. Moreover, the amount of time from the start of heating until the pre-calcination temperature is reached is 0.8 hours to 5.0 hours, and more preferably 1.0 hour to 4.0 hours.

Even without providing this kind of pre-calcination process, it is possible to essentially obtain the same effect as when pre-calcination is performed by slowing the rate of temperature rise in the calcination process described below until a temperature of 650°C is reached.

(Calcination Process)

The calcination process is a process for obtaining lithium composite oxide particles by performing calcination of the lithium mixture that was obtained in the mixing process under specified conditions, and then cooling to room temperature.

Particularly, taking the calcination temperature to be 850°C to 1000°C, the amount of time ($t_2$) to raise the temperature from 650°C to the calcination temperature to be 0.5 hours to 1.5 hours, and the amount of time ($t_3$) that the temperature is maintained at the calcination temperature to be 1 hour to 5 hours has important significance. In other words, by performing calcination of the lithium mixture under these kinds of calcination conditions, it is possible to improve the crystallinity while suppressing crystal growth in the direction orthogonal to the c-axis, and it is possible to obtain lithium composite oxide particles of which the crystallite size ratio at plane (104) is controlled to be in the range of greater than 0 and less than 0.60.

In the present invention, the calcination furnace that is used in the calcination process is not particularly limited as long as the furnace is capable of heating in an air atmosphere to oxygen atmosphere, and more preferably the furnace is an electric furnace that does not generate gas; and it is possible to suitably use a batch-type electric furnace or a continuous-type electric furnace.

[Calcination Temperature]

The calcination temperature in the present invention is 850°C to 1000°C, and preferably 890°C to 1000°C, and more preferably 890°C to 950°C. When the calcination temperature is less than 850°C, problems occur in that the lithium is not sufficiently dispersed and excess lithium and unreacted composite hydroxide particles or composite oxide particles remain, or a lithium composite having a high degree of crystallinity is not obtained. On the other hand, when the calcination temperature is greater than 1000°C, not only does severe sintering occur between lithium composite oxide particles, but also invites abnormal particle growth and it becomes impossible to maintain the spherical shape of the secondary particles. Moreover, sintering also proceeds between primary particles, and thus crystal boundary surfaces and crystal grain boundaries decrease. When the calcination temperature is outside of the specified range in this way, it is not possible to obtain lithium composite oxide particles that have the desired crystal structure and shape, and thus problems occur in the secondary battery that uses this material as well in that the battery capacity decreases, and the cathode resistance increases.

[Calcination Time]

a) Amount of time ($t_1$) to rise from room temperature to 650°C

The amount of time ($t_1$) to rise from room temperature to 650°C is not particularly limited, however, is preferably 0.5 hours to 10 hours, and more preferably 0.8 hours to 10 hours, and even more preferably 1.0 hour to 8 hours. When the time $t_1$ is less than 0.5 hours, the reaction between composite hydroxide particles or composite oxide particles and the lithium in the lithium compound may not proceed sufficiently. On the other hand, when the time $t_1$ is greater than 10 hours, productivity may worsen. In the present invention, room temperature is the state before calcination in which neither heating nor cooling is being performed, and even though room temperature may vary according to the season, is normally 10°C to 35°C.

b) Amount of time ($t_2$) to rise from 650°C to the calcination temperature

The amount of time $t_2$ to rise from 650°C to the calcination temperature during which crystallization occurs is taken to be 0.5 hours to 1.5 hours, and preferably 0.5 hours to 1.2 hours, and more preferably 0.5 hours to 1.0 hour. As a result, it is possible to control the crystallite size ratio at plane (104) to be within the range described above, while also suppressing crystal growth in a direction that is orthogonal to the c-axis.

On the other hand, when the time $t_2$ is less than 0.5 hours, it is not possible for the composite hydroxide particles or composite oxide particles to sufficiently react with the lithium in the lithium compound during this time. Therefore, it is necessary to cause the composite hydroxide particles to react with the lithium after the temperature has reached the calcination temperature. In other words, during the time after the temperature reaches the calcination temperature until maintenance at the calcination temperature ends, the composite hydroxide particles or composite oxide particles continue to react with the lithium, and crystallization must be performed, and as a result, a problem occurs in that crystal growth of the obtained cathode active material proceeds too much. On the other hand, when the time $t_2$ is greater than 1.5 hours, problems occur in that the crystallization of the lithium composite oxide particles is not uniform, excessive sintering occurs between secondary particles and/or primary particles, and the cathode resistance of the secondary battery increases.

c) Maintenance time at the calcination temperature ($t_3$)

The maintenance time ($t_3$) at the calcination temperature is 1.0 hour to 5.0 hours, and preferably 2.0 hours to 5.0 hours, and more preferably, 2.0 hours to 4.0 hours. When $t_3$ is less than 1.0 hour, crystallization of the lithium composite oxide particles does not proceed sufficiently, and the crystallinity decreases. On the other hand, when $t_3$ is greater than 5.0 hours, crystal growth proceeds in the direction orthogonal to the c-axis, so the crystallite size ratio at plane (104) cannot be controlled to be within the range of the present invention.

d) Time from 650°C to the end of calcination ($t_4$)

The time from 650°C to the end of calcination ($t_4 = t_2 + t_3$) is preferably 1.5 hours to 6.5 hours, and more preferably 1.5 hours to 6.0 hours, and even more preferably 1.5 hours to 5.5 hours. Particularly, $t_4$ is preferably 2.0 hours to 5.5 hours. When $t_4$ is less than 1.5 hours, the composite hydroxide particles or composite oxide particles and the lithium compound do not react sufficiently and excess lithium compound and unreacted composite hydroxide particles or composite oxide particles remain, or dispersion of lithium into the composite hydroxide particles or composite oxide particles is not sufficient, so the crystal structure does not become uniform. On the other hand, when $t_4$ is greater than 6.5 hours, crystal growth may proceed in the direction orthogonal to the c-axis.

e) Time from the start of temperature rise to the end of calcination ($t_5$)

The time from the start of temperature rise to the end of calcination, or in other words the overall calcination time ($t_5 = t_1 + t_2 + t_3$) is preferably 3.0 hours to 9.0 hours, and more preferably 3.0 hours to 8.0 hour, and even more preferably 4.0 hours to 8.0 hours. When $t_5$ is less than 3.0 hours, the composite hydroxide particles or composite oxide particles and the lithium compound may not react sufficiently. Moreover, when $t_5$ is greater than 9.0 hours, crystal growth may proceed in the direction orthogonal to the c-axis, and sintering may proceed between particles.

[Rate of Temperature Rise]

The rate of temperature rise during the process from 650°C to the calcination temperature does not necessarily need to be fixed as long as the time of temperature rise during this time is within the range described above. However, the maximum rate of temperature rise during this time is preferably controlled to be 16.0°C/min or less, and more preferably 12.0°C/min or less, and even more preferably 10.0°C/min or less. As a result, it is possible to sufficiently disperse lithium into the composite hydroxide particles or composite oxide particles, and obtain uniform lithium composite oxide particles. However, when the maximum rate of temperature rise is greater than 16°C/min, lithium is not sufficiently dispersed, and there is a possibility that the obtained lithium composite oxide particles will not be uniform.
The average rate of temperature rise in the temperature range described above is preferably controlled to be 2.5°C/min to 16.0°C/min, and more preferably 3.0°C/min to 12.0°C/min, and even more preferably 5.0°C/min to 10.0°C/min. Moreover, the rate of temperature rise during this time is preferably maintained at a constant rate within this range. As a result, the results described above can certainly be obtained.

[Calcination Atmosphere]

The atmosphere during calcination is an oxidizing atmosphere, and preferably is an atmosphere having an oxygen concentration of 18% by volume to 100% by volume, or in other words, calcination is performed in a flow of air or oxygen. From the aspect of cost, it is particularly preferred that calcination be performed in a flow of air. When the oxygen concentration is less than 18% by volume, the oxidizing reaction does not proceed sufficiently, and there is a possibility that the crystallinity of the lithium composite oxide particles that are obtained will not be sufficient.

(6) Crushing Process

In the manufacturing method of the present invention, after the calcination process, there is a crushing process for crushing the lithium composite oxide particles. The lithium composite oxide particles that were obtained in the calcination process may be aggregated together or lightly sintered together. In such a case, by crushing the aggregates or sintered bodies of lithium composite oxide particles, it is possible to easily adjust the average particle size (MV) of the obtained cathode active material to be within the suitable range of 3 $\mu$m to 20 $\mu$m. Crushing is an operation of loosening up the aggregates by applying mechanical energy to the aggregates of plural secondary particles that occurred due to sintered necking or the like between secondary particles during calcination, and separating the secondary particles without destroying the particles themselves.

It is possible to use a known method as the crushing method; for example, it is possible to use a pin mill or a hammer mill. When performing the crushing process, preferably the secondary particles are adjusted to be within a suitable range without destroying the secondary particles.

3. Non-aqueous Electrolyte Secondary Battery

The non-aqueous electrolyte secondary battery of the present invention has components that are similar to a typical non-aqueous electrolyte secondary battery such as a cathode, an anode, a separator, a non-aqueous electrolyte and the like. The form explained below is only an example, and the non-aqueous electrolyte secondary battery of the present invention can undergo various modifications or improvements based on the form disclosed in this specification.

(1) Component Materials

[Cathode]

The cathode of the non-aqueous electrolyte secondary battery is made as described below, for example, using the cathode active material that was obtained according to the present invention.
First, an electrically conductive material and a binding agent are mixed with the powder cathode active material that was obtained according to the present invention; then as necessary, active carbon or solvent for adjusting viscosity is added, and these are all mixed to produce a cathode paste. When doing this, the ratios of components in the cathode paste are important elements for setting the performance of the non-aqueous electrolyte secondary battery. When the solid component of the cathode paste that does not include the solvent is taken to be 100 parts by mass, then, preferably, as in the case of a cathode of a typical non-aqueous electrolyte secondary battery, the content of cathode active material is taken to be 60 parts by mass to 95 parts by mass, the content of the electrically conductive material is taken to be 1 part by mass to 20 parts by mass, and the content of the binding agent is taken to be 1 part by mass to 20 parts by mass.
The obtained cathode paste is applied to the surface of an aluminum foil current collector, and then dried to evaporate the solvent. As necessary, in order to increase the electrode density, pressure may be applied using a roll press. In this way, it is possible to produce a sheet-type cathode. A sheet-type cathode can be cut to an appropriate size to correspond to the target battery, and provided for producing a battery. However, the method for producing a cathode is not limited to the example described above, and other methods can also be used.
As the electrically conductive material, it is possible to use, for example, graphite (natural graphite, artificial graphite, expanded graphite and the like), or carbon black such as acetylene black or Ketjen black.
The binding agent performs the role of binding together active material particles, and, for example, it is possible to use polyvinylidene fluoride (PVDF), polytetrafluoroethylene (PTFE), fluororubber, ethylene propylene diene rubber, styrene-butadiene, cellulose resin, and polyacrylic acid.
Moreover, as necessary, it is possible to add a solvent to the cathode material to disperse the cathode active material, electrically conductive material and active carbon, and to dissolve the binding agent. As the solvent, it is possible to use an organic solvent such as N-methyl-2-pyrrolidone. It is also possible to add active carbon to the cathode material for increasing the electric double-layer capacitance.

[Anode]

An anode that is formed by mixing a binding agent with metallic lithium or lithium alloy, or anode active material that can store or release lithium ions and adding a suitable solvent to form a paste-like anode material, then applying that anode material to the surface of a metal foil, for example, copper foil current collector, then drying the material, and pressing as necessary to increase the electrode density is used as the anode.
As the anode active material, it is possible to use, for example, natural graphite, artificial graphite, an organic composite fired body of phenol resin or the like, and a powdery carbon material like coke. In this case, as in the case of the cathode, it is possible to use a fluorine-containing resin such as PVDF as the anode binding agent, and as the solvent for dispersing the active material and binding agent, an organic solvent such as N-methyl-2-pyrrolidone can be used.

[Separator]

A separator is arranged so as to be held between the cathode and the anode. The separator separates the cathode and the anode and supports an electrolyte; and for the separator, it is possible to use a thin film of polyethylene, polypropylene or the like, that has many small minute holes.

[Non-aqueous Electrolyte]

The non-aqueous electrolyte is an electrolyte in which lithium salt as a supporting electrolyte is dissolved in an organic solvent.

As the organic solvent, it is possible to use one kind or a combination of two kinds or more selected from among a cyclic carbonate such as ethylene carbonate, propylene carbonate, butylene carbonate, trifluoro propylene carbonate and the like; a chain carbonate such as diethyl carbonate, dimethyl carbonate, ethyl methyl carbonate, dipropyl carbonate and the like; an ether compound such as tetrahyrofuran, 2-methyltetrahydrofuran, dimethoxyethane and the like; a sulfur compound such as ethyl methyl sulfone, butane sultone and the like; and a phosphorus compound such as triethyl phosphate, trioctyl phosphate and the like.

As the supporting electrolyte, it is possible to use $LiPF_6$, $LiBF_4$, $LiClO_4$, $LiAsF_6$, $LiN(CF_3SO_2)_2$, a composite salt of these and the like.

Furthermore, the non-aqueous electrolyte can also include a radical scavenger, a surfactant, flame retardant and the like.

(2) Shape and Construction of a Secondary Battery

The non-aqueous electrolyte secondary battery of the present invention that includes a cathode, an anode, a separator, and a non-aqueous electrolyte as described above can have various shapes such as a cylindrical shape, a layered shape and the like.

No matter what shape is used, the cathode and anode are layered with a separator in between to form an electrode body, and the electrolyte is impregnated into the obtained electrode body, collector leads are used to connect between the cathode current collector and a cathode terminal that runs to the outside, and between the anode current collector and an anode terminal that runs to outside, and the components are then sealed in a battery case to complete the non-aqueous electrolyte secondary battery.

(3) Characteristics

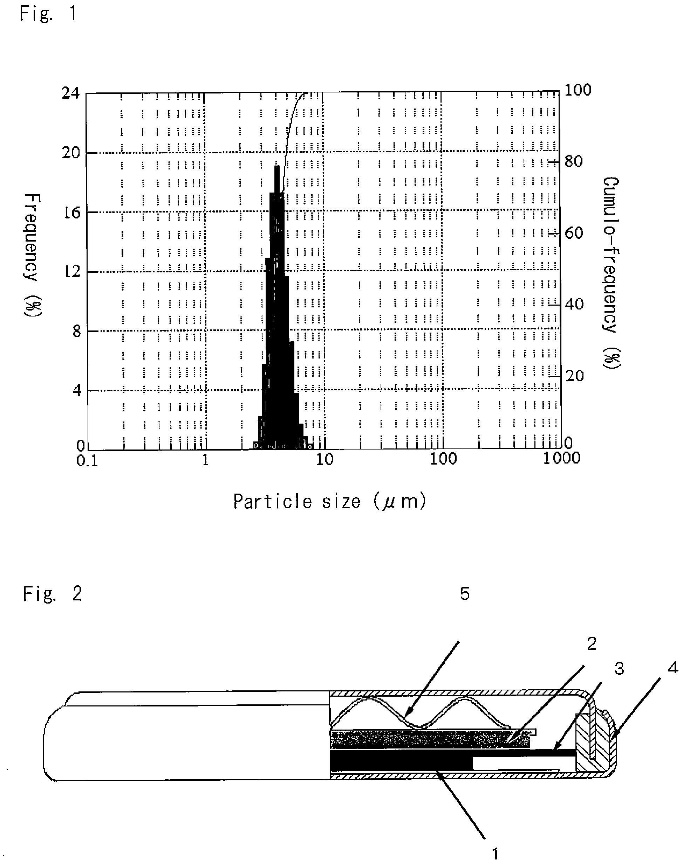

For the non-aqueous electrolyte secondary battery that uses the cathode active material of the present invention, it is possible to improve the output characteristics of the battery, and particularly, it is possible to improve the output characteristics when used in low-temperature environments (near 0°C or less). More specifically, when producing a 2032 type coin battery such as illustrated in FIG. 2 using this cathode active material, the cathode resistance at 0°C can be made to be 110 Ω or less, and preferably 100 Ω or less, and more preferably 95 Ω or less. Therefore, even in cold regions, the non-aqueous electrolyte secondary battery of the present invention is suitable as the power source for compact portable electronic devices, and for transport equipment such as electric automobiles and the like.

At the same time, the non-aqueous electrolyte secondary battery that uses the cathode active material of the present invention is able to achieve a high initial discharge capacity of 150 mAh/g or more, and preferably 155 mAh/g or more, and more preferably 156 mAh/g or more. Moreover, high capacity retention can be obtained even in long cycles, and the battery can be said to have high capacity and long life. Furthermore, when compared with a conventional lithium cobalt composite oxide or lithium nickel composite oxide cathode active material, the battery has high thermal stability and excellent safety.

(4) Uses

As described above, the non-aqueous electrolyte secondary battery of the present invention not only has low cathode resistance and high capacity, but makes it possible to easily maintain safety and simplify expensive protective circuits. Therefore, the non-aqueous electrolyte secondary battery of the present invention can be easily made compact, and can be manufactured at low cost.

The non-aqueous electrolyte secondary battery of the present invention can be said to be suitable as a power source for portable electronic devices for which installation space is limited, or for electric automobiles. The present invention can be used not only as the power source for an electric automobile that is driven simply by electric energy, but also can be used as the power source of a so-called hybrid vehicle in which the battery is used together with a combustion engine such as a gasoline engine or diesel engine.

[Examples]

(Example 1)

First, water was put into a reaction tank (600L), and while stirring, the temperature inside the reaction tank was adjusted to 40°C, and then nitrogen gas was circulated to create a nitrogen atmosphere. To the water in the reaction tank, a proper amount of a 25% by mass sodium hydroxide aqueous solution, and a 25% by mass ammonia water were added, and at a standard liquid temperature of 25°C, the pH value of the reaction fluid in the tank was adjusted to 12.6, to form a pre-reaction aqueous solution.

Next, nickel sulfate, cobalt sulfate, manganese sulfate, zirconium sulfate and sodium tungstate powders were dissolved in the water and adjusted to a 2 mol/L mixed aqueous solution. This mixed aqueous solution was adjusted so that the mole ratios of the metal elements were Ni : Co : Mn = 0.33 : 0.33 : 0.33, and (Ni + Co + Mn) : Zr : W = 0.993 : 0.002 : 0.005.

This mixed aqueous solution was added to the pre-reaction aqueous solution inside the reaction tank at a rate of 1300 ml/min to form the reaction aqueous solution. At the same time, 25% by mass ammonia water and 25% by mass sodium hydroxide aqueous solution were also added at a constant rate to this reaction aqueous solution, and while controlling the pH value of this reaction aqueous solution (nucleation aqueous solution), nucleation was performed for 2 minutes 30 seconds to form crystals.

After that, only the supply of 25% by mass sodium hydroxide aqueous solution was stopped temporarily until the pH value of the reaction aqueous solution became 11.6 at a standard liquid temperature of 25°C (particle growth pH value). After the pH value of the reaction aqueous solution reached 11.6, the supply of sodium hydroxide aqueous solution was restarted, and with the pH value maintained at 11.6, crystallization was continued for 2 hours to perform particle growth.

After that, crystallization was continued for another 4 hours while removing supernatant liquid from the reaction tank to obtain composite hydroxide particles. The composite hydroxide particles where then washed and filtered to obtain powdery composite hydroxide particles.

By performing ICP-atomic emission spectrometry analysis, the composite hydroxide particles were confirmed to be expressed by the general formula: $(Ni_{0.33}Co_{0.33}Mn_{0.33})_{0.993}Zr_{0.002}W_{0.005}(OH)_{2+\alpha}$ ($0 \leq \alpha \leq 0.5$). Moreover, using a laser diffraction and scattering type particle size distribution measuring device (Microtrac HRA, manufactured by Nikkiso Co., Ltd.), the volume integrated sizes (d90, d10) and volume average particle size (MV) were found, and as a result, it was confirmed that the average particle size of the composite hydroxide particles was 5.1 $\mu$m, and [(d90 - d10)/average particle size] was 0.44.

[Heat Treatment and Mixing Process]

The obtained composite hydroxide particles were heat treated for 12 hours at 120°C in an air atmosphere to transform the particles to composite oxide particles.

After that, lithium carbonate was weighed so that Li/Me = 1.14, and then mixed with the composite oxide particles to make a lithium compound. Mixing was performed using a shaker mixer (TURBULA Type T2C, manufacture Willy A. Bachofen (WAB) AG).

[Calcination and Crushing Process]

The lithium compound that was obtained in the mixing process underwent calcination in a flow of air (oxygen: 21% by volume) at a calcination temperature of 950°C. More specifically, the amount of time ($t_1$) to raise the temperature from room temperature (28°C) to 650°C was controlled to be 2.7 hours, and the amount of time ($t_2$) to raise the temperature from 650°C to 950°C was controlled to be 1.3 hours, then after the temperature had risen at a constant rate, the amount of time ($t_3$) that the temperature was maintained was 4.5 hours and calcination was performed at 950°C. In this example, the rate of temperature rise from room temperature to the calcination temperature (average rate of temperature rise) was 3.8°C/min.

The lithium composite oxide particles that were obtained in this way were then cooled to room temperature, and then were crushed to obtain cathode active material for a non-aqueous electrolyte secondary battery.

By performing ICP atomic emission spectrometry analysis, the cathode active material was confirmed to be expressed by the general formula: $Li_{1.14}(Ni_{0.33}Co_{0.33}Mn_{0.33})_{0.993}Zr_{0.002}W_{0.005}O_2$. Moreover, from observation using a scanning electron microscope (SEM), it was confirmed that the cathode active material included secondary particles that included an aggregation of primary particles.

Next, the volume integrated sizes (d90, d10) and the volume average particle size were found using a laser diffraction and scattering type particle size distribution measuring device, and, as a result, it was confirmed that the average particle size of the cathode active material was 5.0 $\mu$m, and [(d90 - d10)/average particle size] was 0.41.

Next, by performing measurement using a nitrogen adsorption type BET measurement device (Quantasorb QS-10, manufactured by Yuasa Ionics, Inc.), the specific surface area of the cathode active material was confirmed to be 1.6 m$^2$/g.

Furthermore, powder X-ray diffraction measurement using CuK$\alpha$ rays was performed using an X-ray diffraction device (X'Pert PRO, manufactured by PANalytical B.V.), and as a result, the crystal structure of this cathode active material was confirmed to be a single-phase lithium compound having a layered hexagonal crystal structure.

Moreover, except for the spread of the diffraction peak of the X-ray diffraction pattern, the half peak widths (full width ah half maximum: FWHM) of each diffracting peak from the crystal were used, and based on the Shellar formula, the crystallite size at plane (104) and the crystallite size at plane (003) of the cathode active material were calculated. As a result, it was confirmed that for this cathode active material, the crystallite size at plane (104) was 52.5 nm, and the crystallite size at plane (003) was 105 nm, so the crystallite size ratio at plane (104) was 0.50.

[Production of a Secondary Battery]

Evaluation of the obtained cathode active material was performed by making a 2032 type coin battery (B) such as described below, and measuring the charging and discharging capacity.

First, 52.5 mg of cathode active material for a non-aqueous electrolyte secondary battery, 15 mg of acetylene black, and 7.5 mg of polytetra ethylene resin fluoride (PTFE) were mixed, and then press molded at a pressure of 100 MPa to a diameter of 11 mm and thickness of 100 $\mu$m, to form the cathode (electrode for evaluation) (1) illustrated in FIG. 2, and this was then dried for 12 hours at 120°C in a vacuum drier.

After drying, the cathode (1) was used to make a 2032 type coin battery (B) inside a glove box having an Ar atmosphere of which the dew point was controlled at -80°C.

Lithium metal having a diameter of 17 mm and thickness of 1 mm was used for the anode (2) of this 2032 type coin battery (B), and a mixed solution of ethylene carbonate (EC) and di-ethyl carbonate (DEC) mixed at a ratio of 3:7 (manufactured by Toyama Pure Chemical Industrial, Ltd.) and having 1M LiPF$_6$ as the supporting electrolyte, was used for the electrolyte. Moreover, a porous polyethylene film having a film thickness of 25 $\mu$m was used for the separator (3). In addition to the components described above, this 2032 type coin battery (B) included a gasket (4) and a waved washer (5).

[Battery Evaluation]

The 2032 type coin battery that was made, was left after assembly for 24 hours, until the Open Circuit Voltage (OCV) was confirmed to be stable. After that, with a charging depth of 20% at 0°C, the battery was charged and discharged for 10 seconds, while changing the current density to be 0.785 mA, 1.5 mA, and 3.0 mA, and the slope with respect to the current density was found from the lowered potential during discharge, the current when the potential lowered to 3V was found, and the cathode resistance was evaluated. Moreover, with the current density of the cathode being 0.1 mA/cm$^2$, the initial discharge capacity at 4.8V to 2.5V was evaluated. The results are given in Table 1 and Table 2.

(Example 2)

In the mixing process, except for mixing in lithium carbonate so that Li/Me = 1.16, and in the calcination process, except for the calcination temperature being 898°C, time $t_1$ being 2.9 hours, time $t_2$ being 1.1 hours, and time $t_3$ being 4.5 hours, the cathode active material was obtained and evaluated in the same way as in Example 1.

(Example 3)

In the calcination process, except for the calcination temperature being 898°C, time $t_1$ being 1.8 hours, time $t_2$ being 0.7 hours, and time $t_3$ being 4.0 hours, the cathode active material was obtained and evaluated in the same way as in Example 1.

(Example 4)

In the mixing process, except for mixing in lithium carbonate so that Li/Me = 1.16, and in the calcination process, except for the calcination temperature being 932°C, time $t_1$ being 1.4 hours, time $t_2$ being 0.6 hours, and time $t_3$ being 2.0 hours, the cathode active material was obtained and evaluated in the same way as in Example 1.

(Example 5)

In the mixing process, except for mixing in lithium carbonate so that Li/Me = 1.13, and in the calcination process, except for the calcination temperature being 932°C, time $t_1$ being 2.8 hours, time $t_2$ being 1.2 hours, and time $t_3$ being 5.0 hours, the cathode active material was obtained and evaluated in the same way as in Example 1.

(Example 6)

In the calcination process, except for time $t_1$ being 3.0 hours, time $t_2$ being 1.5 hours, and time $t_3$ being 1.0 hour, the cathode active material was obtained and evaluated in the same way as in Example 1.

(Example 7)

In the calcination process, except for the calcination temperature being 850°C, the cathode active material was obtained and evaluated in the same way as in Example 1.

(Example 8)

In the calcination process, except for the calcination temperature being 1000°C, and time $t_3$ being 4.0 hours, the cathode active material was obtained and evaluated in the same way as in Example 1.

(Example 9)

In the calcination process, except for time $t_2$ being 0.5 hours, and time $t_3$ being 1.0 hour (time $t_4$ is taken to be 1.5 hours), the cathode active material was obtained and evaluated in the same way as in Example 1.

(Example 10)

In the calcination process, except for the calcination temperature being 950°C, time $t_2$ being 1.3 hours, and time $t_3$ being 4.0 hours, and the rate of temperature rise from 650°C to 810°C being 16.0°/min, the cathode active material was obtained and evaluated in the same way as in Example 1.

(Example 11)

In the calcination process, except for the calcination temperature being 1000°C, time $t_1$ being 0.5 hours, time $t_2$ being 0.5 hours, and time $t_3$ being 4.0 hours, and the average rate of temperature rise being 11.7°C/min, the cathode active material was obtained and evaluated in the same way as in Example 1.

(Comparative Example 1)

In the mixing process, except for mixing in lithium carbonate so that Li/Me = 1.12, and in the calcination process, except for the calcination temperature being 850°C, time $t_1$ being 3.0 hours, time $t_2$ being 1.0 hour, and time $t_3$ being 0.5 hours, the cathode active material was obtained and evaluated in the same way as in Example 1.

(Comparative Example 2)

In the calcination process, except for the calcination temperature being 800°C, time $t_1$ being 3.2 hours, time $t_2$ being 0.8 hours, and time $t_3$ being 4.0 hours, the cathode active material was obtained and evaluated in the same way as in Example 1.

(Comparative Example 3)

In the calcination process, except for the calcination temperature being 950°C, time $t_1$ being 4.0 hours, time $t_2$ being 2.0 hours, and time $t_3$ being 6.0 hours, the cathode active material was obtained and evaluated in the same way as in Example 1.

(Comparative Example 4)

In the calcination process, except for the calcination temperature being 900°C, time $t_1$ being 1.1 hours, time $t_2$ being 0.4 hours, and time $t_3$ being 1.0 hour, the cathode active material was obtained and evaluated in the same way as in Example 1.

(Comparative Example 5)

In the calcination process, except for the calcination temperature being 1050°C, time $t_1$ being 2.5 hours, time $t_2$ being 1.5 hours, and time $t_3$ being 4.0 hours, the cathode active material was obtained and evaluated in the same way as in Example 1.

(Comparative Example 6)

In the calcination process, except for time $t_1$ being 8.0 hours, time $t_2$ being 2.0 hours, and time $t_3$ being 4.0 hours, the cathode active material was obtained and evaluated in the same way as in Example 1.

[Table 1]

| | Composition | Calcination Temperature (°C) | Calcination Time | | | | | Maximum Rate of Temperat-ure Rise (°C/min) | Average Rate of Temperat-ure Rise (°C/min) |
|---|---|---|---|---|---|---|---|---|---|
| | | | Room Temperature to 650°C $t_1$ (hr) | 650°C to Calcina-tion Temperat-ure $t_2$ (hr) | Maintenance Time $t_3$ (hr) | 650°C to End of Calcination $t_4$ (hr) | Room Temperat-ure to End of Calcination $t_5$ (hr) | | |
| Ex. 1 | $(Ni_{0.33}Co_{0.33}Mn_{0.33})_{0.993}Zr_{0.002}W_{0.005}(OH)_{2+\alpha}$ | 950 | 2.7 | 1.3 | 4.5 | 5.8 | 8.5 | 3.8 | 3.8 |
| Ex. 2 | $(Ni_{0.33}Co_{0.33}Mn_{0.33})_{0.993}Zr_{0.002}W_{0.005}(OH)_{2+\alpha}$ | 898 | 2.9 | 1.1 | 4.5 | 5.6 | 8.5 | 3.8 | 3.8 |
| Ex. 3 | $(Ni_{0.33}Co_{0.33}Mn_{0.33})_{0.993}Zr_{0.002}W_{0.005}(OH)_{2+\alpha}$ | 898 | 1.8 | 0.7 | 4.0 | 4.7 | 6.5 | 5.9 | 5.9 |
| Ex. 4 | $(Ni_{0.33}Co_{0.33}Mn_{0.33})_{0.993}Zr_{0.002}W_{0.005}(OH)_{2+\alpha}$ | 932 | 1.4 | 0.6 | 2.0 | 2.6 | 4.0 | 7.8 | 7.8 |
| Ex. 5 | $(Ni_{0.33}Co_{0.33}Mn_{0.33})_{0.993}Zr_{0.002}W_{0.005}(OH)_{2+\alpha}$ | 932 | 2.8 | 1.2 | 5.0 | 6.2 | 9.0 | 3.9 | 3.9 |
| Ex. 6 | $(Ni_{0.33}Co_{0.33}Mn_{0.33})_{0.993}Zr_{0.002}W_{0.005}(OH)_{2+\alpha}$ | 950 | 3.0 | 1.5 | 1.0 | 2.5 | 5.5 | 3.3 | 3.3 |
| Ex. 7 | $(Ni_{0.33}Co_{0.33}Mn_{0.33})_{.993}Zr_{0.002}W_{0.005}(OH)_{2+\alpha}$ | 850 | 2.7 | 1.3 | 4.5 | 5.8 | 8.5 | 2.6 | 2.6 |
| Ex. 8 | $(Ni_{0.33}Co_{0.33}Mn_{0.33})_{.993}Zr_{0.002}W_{0.005}(OH)_{2+\alpha}$ | 1000 | 2.7 | 1.3 | 4.0 | 5.3 | 8.0 | 4.5 | 4.5 |
| Ex. 9 | $(Ni_{0.33}Co_{0.33}Mn_{0.33})_{.993}Zr_{0.002}W_{0.005}(OH)_{2+\alpha}$ | 950 | 2.7 | 0.5 | 1.0 | 1.5 | 4.2 | 10.0 | 10.0 |

EP 3 026 740 B1

(continued)

| | Composition | Calcination Temperature (°C) | Calcination Time | | | | | Maximum Rate of Temperat-ure Rise (°C/min) | Average Rate of Temperat-ure Rise (°C/min) |
|---|---|---|---|---|---|---|---|---|---|
| | | | Room Temperature to 650°C $t_1$ (hr) | 650°C to Calcina-tion Temperat-ure $t_2$ (hr) | Maintenance Time $t_3$ (hr) | 650°C to End of Calcination $t_4$ (hr) | Room Temperat-ure to End of Calcination $t_5$ (hr) | | |
| Ex. 10 | $(Ni_{0.33}Co_{0.33}Mn_{0.33})_{.993}Zr_{0.002}W_{0.005}(OH)_{2+\alpha}$ | 950 | 2.7 | 1.3 | 4.0 | 5.3 | 8.0 | 16.0 | 3.8 |
| Ex. 11 | $(Ni_{0.33}Co_{0.33}Mn_{0.33})_{.993}Zr_{0.002}W_{0.005}(OH)_{2+\alpha}$ | 1000 | 0.5 | 0.5 | 4.0 | 4.5 | 5.0 | 11.7 | 11.7 |
| CE. 1 | $(Ni_{0.33}Co_{0.33}Mn_{0.33})_{.993}Zr_{0.002}W_{0.005}(OH)_{2+\alpha}$ | 850 | 3.0 | 1.0 | 0.5 | 1.5 | 4.5 | 3.3 | 3.3 |
| CE. 2 | $(Ni_{0.33}Co_{0.33}Mn_{0.33})_{.993}Zr_{0.002}W_{0.005}(OH)_{2+\alpha}$ | 800 | 3.2 | 0.8 | 4.0 | 4.8 | 8.0 | 3.1 | 3.1 |
| CE. 3 | $(Ni_{0.33}Co_{0.33}Mn_{0.33})_{.993}Zr_{0.002}W_{0.005}(OH)_{2+\alpha}$ | 950 | 4.0 | 2.0 | 6.0 | 8.0 | 12.0 | 2.5 | 2.5 |
| CE. 4 | $(Ni_{0.33}Co_{0.33}Mn_{0.33})_{.993}Zr_{0.002}W_{0.005}(OH)_{2+\alpha}$ | 900 | 1.1 | 0.4 | 1.0 | 1.4 | 2.5 | 10.4 | 10.4 |
| CE. 5 | $(Ni_{0.33}Co_{0.33}Mn_{0.33})_{.993}Zr_{0.002}W_{0.005}(OH)_{2+\alpha}$ | 1050 | 2.5 | 1.5 | 4.0 | 5.5 | 8.0 | 4.4 | 4.4 |
| CE. 6 | $(Ni_{0.33}Co_{0.33}Mn_{0.33})_{.993}Zr_{0.002}W_{0.005}(OH)_{2+\alpha}$ | 950 | 8.0 | 2.0 | 4.0 | 6.0 | 14.0 | 2.5 | 2.5 |

EP 3 026 740 B1

[Table 2]

| | Cathode Active Material | | | | Crystallite Size (nm) | | Crystallite Size Rate at Plane (104) | Secondary Battery | |
|---|---|---|---|---|---|---|---|---|---|
| | Composition | Average Particle Size ($\mu$m) | (d90 - d10)/Average Particle Size | Specific Surface Area ($m^2$/g) | (104) | (003) | | Cathode Resistance ($\Omega$) | Initial Discharge Capacity (mAh/g) |
| Ex. 1 | $Li_{1.14}(Ni_{0.33}Co_{0.33}Mn_{0.33})_{0.993}Zr_{0.002}W_{0.005}O_2$ | 5.0 | 0.41 | 1.6 | 52.5 | 105 | 0.50 | 105 | 157.8 |
| Ex. 2 | $Li_{1.14}(Ni_{0.33}Co_{0.33}Mn_{0.33})_{0.993}Zr_{0.002}W_{0.005}O_2$ | 5.1 | 0.42 | 1.6 | 54.0 | 109 | 0.50 | 103 | 157.1 |
| Ex. 3 | $Li_{1.14}(Ni_{0.33}Co_{0.33}Mn_{0.33})_{0.993}Zr_{0.002}W_{0.005}O_2$ | 5.3 | 0.45 | 1.4 | 45.9 | 115 | 0.40 | 95 | 156.8 |
| Ex. 4 | $Li_{1.14}(Ni_{0.33}Co_{0.33}Mn_{0.33})_{0.993}Zr_{0.002}W_{0.005}O_2$ | 5.3 | 0.44 | 1.4 | 48.0 | 117 | 0.41 | 92 | 157.5 |
| Ex. 5 | $Li_{1.14}(Ni_{0.33}Co_{0.33}Mn_{0.33})_{0.993}Zr_{0.002}W_{0.005}O_2$ | 5.1 | 0.42 | 1.5 | 70.8 | 128 | 0.55 | 108 | 157.9 |
| Ex. 6 | $Li_{1.14}(Ni_{0.33}Co_{0.33}Mn_{0.33})_{0.993}Zr_{0.002}W_{0.005}O_2$ | 5.0 | 0.40 | 1.6 | 47.2 | 112 | 0.42 | 97 | 156.9 |
| Ex. 7 | $Li_{1.14}(Ni_{0.33}Co_{0.33}Mn_{0.33})_{0.993}Zr_{0.002}W_{0.005}O_2$ | 5.0 | 0.40 | 1.6 | 49.5 | 103 | 0.48 | 102 | 156.8 |
| Ex. 8 | $Li_{1.14}(Ni_{0.33}Co_{0.33}Mn_{0.33})_{0.993}Zr_{0.002}W_{0.005}O_2$ | 5.2 | 0.43 | 1.4 | 50.2 | 112 | 0.45 | 99 | 156.7 |
| Ex. 9 | $Li_{1.14}(Ni_{0.33}Co_{0.33}Mn_{0.33})_{0.993}Zr_{0.002}W_{0.005}O_2$ | 5.3 | 0.44 | 1.4 | 40.2 | 101 | 0.40 | 94 | 155.8 |

(continued)

| | Cathode Active Material | | | | Crystallite Size (nm) | | | Secondary Battery | |
|---|---|---|---|---|---|---|---|---|---|
| | Composition | Average Particle Size ($\mu$m) | (d90 - d10)/Average Particle Size | Specific Surface Area ($m^2$/g) | (104) | (003) | Crystallit-e Size Rate at Plane (104) | Cathode Resistance ($\Omega$) | Initial Discharge Capacity (mAh/g) |
| Ex. 10 | $Li_{1.14}(Ni_{0.33}Co_{0.33}Mn_{0.33})_{0.993}Zr_{0.002}W_{0.005}O_2$ | 5.4 | 0.45 | 1.3 | 48.3 | 124 | 0.39 | 94 | 156.0 |
| Ex. 11 | $Li_{1.14}(Ni_{0.33}Co_{0.33}Mn_{0.33})_{0.993}Zr_{0.002}W_{0.005}O_2$ | 5.4 | 0.45 | 1.3 | 48.5 | 128 | 0.38 | 94 | 157.2 |
| CE. 1 | $Li_{1.14}(Ni_{0.33}Co_{0.33}Mn_{0.33})_{0.993}Zr_{0.002}W_{0.005}O_2$ | 5.1 | 0.40 | 1.4 | 88.9 | 135 | 0.66 | 118 | 148.1 |
| CE. 1 C E. 2 | $Li_{1.14}(Ni_{0.33}Co_{0.33}Mn_{0.33})_{0.993}Zr_{0.002}W_{0.005}O_2$ | 5.1 | 0.41 | 1.3 | 95.8 | 145 | 0.66 | 117 | 140.9 |
| CE. 3 | $Li_{1.14}(Ni_{0.33}Co_{0.33}Mn_{0.33})_{0.993}Zr_{0.002}W_{0.005}O_2$ | 5.0 | 0.40 | 1.4 | 99.9 | 147 | 0.68 | 120 | 157.9 |
| CE. 4 | $Li_{1.14}(Ni_{0.33}Co_{0.33}Mn_{0.33})_{0.993}Zr_{0.002}W_{0.005}O_2$ | 5.6 | 0.47 | 1.1 | 72.0 | 114 | 0.63 | 113 | 151.6 |
| CE. 5 | $Li_{1.14}(Ni_{0.33}Co_{0.33}Mn_{0.33})_{0.993}Zr_{0.002}W_{0.005}O_2$ | 5.3 | 0.45 | 1.3 | 97.0 | 141 | 0.69 | 121 | 139.8 |
| CE. 6 | $Li_{1.14}(Ni_{0.33}Co_{0.33}Mn_{0.33})_{0.993}Zr_{0.002}W_{0.005}O_2$ | 5.1 | 0.40 | 1.4 | 106 | 147 | 0.72 | 125 | 156.5 |

From the result given in Table 1 and Table 2, it is confirmed that the crystallite size ratio at plane (104) of the cathode active material of Examples 1 to 11 that belong to the technical range of the present invention is within the range of 0.60 or less. Moreover, for the 2032 type coin battery of Examples 1 to 11 that uses this kind of cathode active material as the cathode material, it is confirmed that not only is it possible to keep the cathode resistance at 0°C 110Ω or less, it is also possible for the initial discharge capacity to reach 150 mAh/g.

On the other hand, it was confirmed that in the case of cathode active material for which one or more of the calcination conditions is outside the range of the present invention, the crystallite size ratio at plane (104) was greater than 0.60. Moreover, in the 2032 type coin batteries of comparative examples 1 to 6 that use this kind of cathode active material for the cathode material, it is confirmed that the cathode resistance at 0°C is a large value.

[Explanation of Reference Numbers]

1    Cathode
2    Anode
3    Separator
4    Gasket
5    Waved washer

**Claims**

1. A cathode active material for a non-aqueous electrolyte secondary battery that is expressed by a general formula (A): $Li_{1+a}Ni_xCo_yMn_zM_tO_2$ (where $-0.05 \leq a \leq 0.20$, $x + y + z + t = 1$, $0.3 \leq x \leq 0.7$, $0.1 \leq y \leq 0.4$, $0.1 \leq z \leq 0.4$, $0 \leq t \leq 0.05$, and M is one or more element selected from among Ca, Mg, Al, Ti, V, Cr, Zr, Nb, Mo, Hf, Ta, and W), and includes layered hexagonal crystal lithium nickel cobalt manganese composite oxide particles that include secondary particles that are formed by an aggregation of primary particles;
   **characterized in that**
   the lithium nickel cobalt manganese composite oxide particles are obtained by performing calcination of the lithium mixture comprising nickel cobalt manganese composite hydroxide and lithium compound in an oxidizing atmosphere where the amount of time from 650°C to the calcination temperature is in the range of 0.5 hours to 1.5 hours, the calcination temperature is 850°C to 1000°C, and the temperature is maintained at this temperature for 1.0 hour to 5.0 hours;
   and
   the ratio of the crystallite sizes found from the half peak width of the diffraction peak at plane (104) with respect to the half peak width of the diffraction peak at plane (003) of the Miller indices (hkl) in powder X-ray diffraction that uses CuKα rays is 0.35 or greater and less than 0.60;
   and
   the crystallite size that is found from the half peak width of the diffraction peak at plane (003) is in the range of 80 nm to 140 nm, and the crystallite size that is found from the half peak width of the diffraction peak at plane (104) is in the range of 40 nm to 80 nm.

2. The cathode active material for a non-aqueous electrolyte secondary battery according to claim 1,
   wherein the nickel cobalt manganese composite hydroxide particles are obtained by performing nucleation by controlling the nucleation aqueous solution that includes a metal compound and ammonium ion donor so that the pH value at a reference liquid temperature of 25°C is 12.0 to 14.0, and then causing the nuclei to grow by controlling the particle growth aqueous solution that includes the nuclei that were formed in the nucleation process so that the pH value at a reference liquid temperature of 25°C is 10.5 to 12.0, and
   wherein the average particle size of the secondary particles is 3 μm to 20 μm.

3. The cathode active material for a non-aqueous electrolyte secondary battery according to claim 2, wherein the index [(d90 - d10)/average particle size] that indicates the spread of the particle size distribution of the secondary particles is 0.60 or less.

4. A manufacturing method for producing a cathode active material for a non-aqueous electrolyte secondary battery according to any of claims 1 to 3, the method comprising:

a crystallization process of obtaining nickel cobalt manganese composite hydroxide particles that are expressed by the general formula (B): $Ni_xCo_yMn_zM_t(OH)_{2+\alpha}$ (where x + y + z + t = 1, 0.3 ≤ x ≤ 0.7, 0.1 ≤ y 0.4, 0.1 ≤ z ≤ 0.4, 0 ≤ t ≤ 0.01, and M is one or more element selected from among Ca, Mg, Al, Ti, V, Cr, Zr, Nb, Mo, Hf, Ta, and W);

a mixing process for obtaining a lithium mixture by mixing a lithium compound with the nickel cobalt manganese composite hydroxide particles so that the ratio of the number of lithium atoms with respect to the total number of atoms of metal elements other than lithium becomes 0.95 to 1.20; and

a calcination process for obtaining lithium nickel cobalt manganese composite oxide particles by performing calcination of the lithium mixture in an oxidizing atmosphere where the amount of time from 650°C to the calcination temperature is in the range of 0.5 hours to 1.5 hours, the calcination temperature is 850°C to 1000°C, and the temperature is maintained at this temperature for 1.0 hour to 5.0 hours.

5. The manufacturing method for producing a cathode active material for a non-aqueous electrolyte secondary battery according to Claim 4, wherein in the calcination process, the overall calcination time from the start of temperature rise to the end of calcination is 3.0 hours to 9.0 hours.

6. The manufacturing method for producing a cathode active material for a non-aqueous electrolyte secondary battery according to Claim 4 or Claim 5, wherein, in the crystallization process, by performing nucleation by controlling the nucleation aqueous solution that includes a metal compound and ammonium ion donor so that the pH value at a reference liquid temperature of 25°C is 12.0 to 14.0, and then causing the nuclei to grow by controlling the particle growth aqueous solution that includes the nuclei that were formed in the nucleation process so that the pH value at a reference liquid temperature of 25°C is 10.5 to 12.0, the nickel cobalt manganese composite hydroxide particles are obtained so that the average particle size is in the range of 3 μm to 20 μm, and nickel cobalt manganese composite hydroxide particles of which the index [(d90 -d10)/average particle size] that indicates the spread of the particle size distribution of the secondary particles is 0.60 or less.

7. The manufacturing method for producing a cathode active material for a non-aqueous electrolyte secondary battery according to any one of Claims 4 to 6, further comprising a heat-treatment process before the mixing process for heat treating the nickel cobalt manganese composite hydroxide particles to a temperature in the range of 105°C to 400°C.

8. The manufacturing method for producing a cathode active material for a non-aqueous electrolyte secondary battery according to any one of Claims 4 to 7, further comprising a crushing process for crushing the lithium nickel cobalt manganese composite oxide particles that were obtained in the calcination process.

9. A non-aqueous electrolyte secondary battery comprising a cathode, an anode, a separator and a non-aqueous electrolyte, and uses the cathode active material for a non-aqueous electrolyte according to any one of Claims 1 to 4 as the cathode material of the cathode.

**Patentansprüche**

1. Kathodenaktives Material für eine Sekundärbatterie mit nichtwässerigem Elektrolyt, das durch eine allgemeine Formel (A) ausgedrückt wird: $Li_{1+a}Ni_xCo_yMn_zM_tO_2$ (mit -0,05 ≤ a ≤ 0,20, x + y + z + t = 1, 0,3 ≤ x ≤ 0,7, 0,1 ≤ y ≤ 0,4, 0,1 ≤ z ≤ 0,4, 0 ≤ t ≤0,05, und wobei M ein oder mehrere Elemente ist, ausgewählt aus Ca, Mg, Al, Ti, V, Cr, Zr, Nb, Mo, Hf, Ta und W) und geschichtete Hexagonalkristall-Lithium-Nickel-Kobalt-Mangan-Verbundsauerstoffpartikel enthält, die sekundäre Partikel enthalten, die durch eine Aggregation von primären Partikeln gebildet sind; **dadurch gekennzeichnet, dass**

die Lithium-Nickel-Kobalt-Mangan-Verbundsauerstoffpartikel durch Durchführen von Kalzinierung der Lithiummischung, umfassend Nickel-Kobalt-Mangan-Verbundhydroxid und Lithiumverbindung, in einer oxidierenden Atmosphäre erlangt werden, wobei die Zeitdauer von 650 °C bis zu Kalzinierungstemperatur im Bereich von 0,5 Stunden bis 1,5 Stunden ist, die Kalzinierungstemperatur 850 °C bis 1000 °C beträgt und die Temperatur bei dieser Temperatur 1,0 Stunde bis 5,0 Stunden gehalten wird; und

das Verhältnis der Kristallitgrößen, gefunden von der Halbspitzenbreite der Beugungsspitze auf der Ebene (104) in Bezug auf die Halbspitzenbreite der Beugungsspitze auf der Ebene (003) der Miller-Indices (hkl) bei Pulverröntgendiffraktion, die CuKa-Strahlen verwendet, 0,35 oder größer und kleiner als 0,60 ist; und

die Kristallitgröße, die von der Halbspitzenbreite der Beugungsspitze auf der Ebene (003) gefunden wird, im Bereich von 80 nm bis 140 nm ist, und die Kristallitgröße, die von der Halbspitzenbreite der Brechungsspitze auf der Ebene (104) gefunden wird, im Bereich von 40 nm bis 80 nm ist.

2. Kathodenaktives Material für eine Sekundärbatterie mit nichtwässerigem Elektrolyt nach Anspruch 1, wobei die Nickel-Kobalt-Mangan-Verbundhydroxidpartikel durch Durchführen von Nukleation erlangt werden, indem die wässerige Nukleationslösung, die eine Metallverbindung und einen Ammoniumionendonor enthält, derart kontrolliert wird, dass der pH-Wert bei einer Referenzflüssigkeitstemperatur von 25 °C 12,0 bis 14,0 beträgt, und dann Wachsen der Keime bewirkt wird, indem die wässerige Lösung für Partikelwachstum, die die Keime enthält, die in dem Nukleationsprozess gebildet wurden, so kontrolliert wird, dass der pH-Wert bei einer Referenzflüssigkeitstemperatur von 25 °C 10,5 bis 12,0 beträgt, und wobei die durchschnittliche Partikelgröße der sekundären Partikel 3 μm bis 20 μm beträgt.

3. Kathodenaktives Material für eine Sekundärbatterie mit nichtwässerigem Elektrolyt nach Anspruch 2, wobei der Index [(d90 - d10)/durchschnittliche Partikelgröße], der die Streuung der Partikelgrößenverteilung der sekundären Partikel angibt, 0,60 oder weniger beträgt.

4. Herstellungsverfahren zum Produzieren eines kathodenaktiven Materials für eine Sekundärbatterie mit nichtwässerigem Elektrolyt nach einem der Ansprüche 1 bis 3, das Verfahren umfassend:

   einen Kristallisierungsprozess zum Erlangen von Nickel-Kobalt-Mangan-Verbundhydroxidpartikeln, die durch die allgemeine Formel (B) ausgedrückt werden: $Ni_xCo_yMn_zM_t(OH)_{2+\alpha}$ (mit x + y + z + t = 1, $0,3 \le x \le 0,7$, $0,1 \le y \le 0,4$, $0,1 \le z \le 0,4$, $0 \le t \le 0,01$, und wobei M ein oder mehrere Elemente ist, ausgewählt aus Ca, Mg, Al, Ti, V, Cr, Zr, Nb, Mo, Hf, Ta und W);
   einen Mischprozess zum Erlangen einer Lithiummischung durch Mischen einer Lithiumverbindung mit den Nickel-Kobalt-Mangan-Verbundhydroxidpartikeln, so dass das Verhältnis der Anzahl von Lithiumatomen in Bezug auf die Gesamtzahl von Atomen von Metallelementen außer Lithium 0,95 bis 1,20 wird; und
   einen Kalzinierungsprozess zum Erlangen von Lithium-Nickel-Kobalt-Mangan-Verbundsauerstoffpartikeln durch Durchführen von Kalzinierung der Lithiummischung in einer oxidierenden Atmosphäre, wobei die Zeitdauer von 650 °C bis zu Kalzinierungstemperatur im Bereich von 0,5 Stunden bis 1,5 Stunden ist, die Kalzinierungstemperatur 850 °C bis 1000 °C beträgt und die Temperatur bei dieser Temperatur 1,0 Stunde bis 5,0 Stunden gehalten wird.

5. Herstellungsverfahren zum Produzieren eines kathodenaktiven Materials für eine Sekundärbatterie mit nichtwässerigem Elektrolyt nach Anspruch 4, wobei in dem Kalzinierungsprozess die gesamte Kalzinierungszeit vom Beginn des Temperaturanstiegs bis zum Ende der Kalzinierung 3,0 Stunden bis 9,0 Stunden beträgt.

6. Herstellungsverfahren zum Produzieren eines kathodenaktiven Materials für eine Sekundärbatterie mit nichtwässerigem Elektrolyt nach Anspruch 4 oder Anspruch 5, wobei in dem Kristallisierungsprozess durch Durchführen von Nukleation, indem die wässerige Nukleationslösung, die eine Metallverbindung und einen Ammoniumionendonor enthält, derart kontrolliert wird, dass der pH-Wert bei einer Referenzflüssigkeitstemperatur von 25 °C 12,0 bis 14,0 beträgt, und dann Wachsen der Keime bewirkt wird, indem die wässerige Lösung für Partikelwachstum, die die Keime enthält, die in dem Nukleationsprozess gebildet wurden, so kontrolliert wird, dass der pH-Wert bei einer Referenzflüssigkeitstemperatur von 25 °C 10,5 bis 12,0 beträgt, die Nickel-Kobalt-Mangan-Verbundhydroxidpartikel derart erlangt werden, dass die durchschnittliche Partikelgröße im Bereich von 3 μm bis 20 μm ist, und Nickel-Kobalt-Mangan-Verbundhydroxidpartikel, deren Index [(d90 - d10)/durchschnittliche Partikelgröße], der die Streuung der Partikelgrößenverteilung der sekundären Partikel angibt, 0,60 oder weniger beträgt.

7. Herstellungsverfahren zum Produzieren eines kathodenaktiven Materials für eine Sekundärbatterie mit nichtwässerigem Elektrolyt nach einem der Ansprüche 4 bis 6, ferner umfassend einen Wärmebehandlungsprozess vor dem Mischprozess zum Wärmebehandeln der Nickel-Kobalt-Mangan-Verbundhydroxidpartikel auf eine Temperatur im Bereich von 105 °C bis 400 °C.

8. Herstellungsverfahren zum Produzieren eines kathodenaktiven Materials für eine Sekundärbatterie mit nichtwässerigem Elektrolyt nach einem der Ansprüche 4 bis 7, ferner umfassend einen Mahlungsprozess zum Mahlen der Lithium-Nickel-Kobalt-Mangan-Verbundsauerstoffpartikel, die in dem Kalzinierungsprozess erlangt wurden.

9. Sekundärbatterie mit nichtwässerigem Elektrolyt, umfassend eine Kathode, eine Anode, eine Trennungsvorrichtung und ein nichtwässeriges Elektrolyt, und die das kathodenaktive Material für ein nichtwässeriges Elektrolyt nach

**EP 3 026 740 B1**

einem der Ansprüche 1 bis 4 als das Kathodenmaterial der Kathode verwendet.

**Revendications**

1. Matière active de cathode pour une batterie secondaire à électrolyte non-aqueux qui est représentée par la formule générale (A) : $Li_{1+a}Ni_xCo_yMn_zM_tO_2$ (dans laquelle $-0,05 \leq a \leq 0,20$, $x + y + z + t = 1$, $0,3 \leq x \leq 0,7$, $0,1 \leq y \leq 0,4$, $0,1 \leq z \leq 0,4$, $0 \leq t \leq 0,05$ et M est un ou plusieurs éléments sélectionnés parmi Ca, Mg, Al, Ti, V, Cr, Zr, Nb, Mo, Hf, Ta et W), et inclut des particules d'oxyde composite de lithium-nickel-cobalt-manganèse à structure cristalline hexagonale stratifiée qui incluent des particules secondaires formées par une agrégation de particules primaires, **caractérisée en ce que** les particules d'oxyde composite de lithium-nickel-cobalt-manganèse sont obtenues en réalisant une calcination du mélange de lithium comprenant de l'hydroxyde composite de nickel-cobalt-manganèse et un composé de lithium dans une atmosphère oxydante, dans laquelle la durée pour atteindre la température de calcination à partir d'une température de 650 °C est de 0,5 heures à 1,5 heures, la température de calcination est de 850 °C à 1000 °C, et la température est maintenue à cette température pendant 1,0 heure à 5,0 heures, et le rapport des tailles de cristallite trouvées à partir de la largeur à mi-hauteur du pic de diffraction à un plan (104) par rapport à la largeur à mi-hauteur du pic de diffraction au plan (003) des indices de Miller (hkl) par diffraction de rayons X sur poudre qui utilise des rayons CuK$\alpha$ est de 0,35 ou supérieur et inférieur à 0,60, et la taille de cristallite trouvée à partir de la largeur à mi-hauteur du pic de diffraction au plan (003) est dans la plage de 80 nm à 140 nm, et la taille de cristallite trouvée à partir de la largeur à mi-hauteur du pic de diffraction au plan (104) est dans la plage de 40 nm à 80 nm.

2. Matière active de cathode pour une batterie secondaire à électrolyte non-aqueux selon la revendication 1, dans laquelle les particules d'hydroxyde composite de nickel-cobalt-manganèse sont obtenues en exécutant une nucléation en ajustant la solution aqueuse de nucléation qui inclut un composé de métal et un donneur d'ions ammonium de manière à ce que le pH à une température de référence de liquide de 25 °C soit de 12,0 à 14,0, puis en engendrant une croissance des germes en ajustant la solution aqueuse de croissance de particules qui inclut les germes formés dans le processus de nucléation de manière à ce que le pH à une température de liquide de référence de 25 °C soit de 10,5 à 12,0, et dans laquelle la granulométrie moyenne des particules secondaires est de 3 $\mu$m à 20 $\mu$m.

3. Matière active de cathode pour une batterie secondaire à électrolyte non-aqueux selon la revendication 2, dans laquelle l'indice [(d90 - d10 / granulométrie moyenne] qui indique la dispersion de la distribution granulométrique des particules secondaires est de 0,60 ou moins.

4. Procédé de fabrication pour produire une matière active de cathode pour une batterie secondaire à électrolyte non-aqueux selon l'une quelconque des revendications 1 à 3, le procédé comprenant :

   un processus de cristallisation pour obtenir des particules d'hydroxyde composite de nickel-cobalt-manganèse représentées par la formule générale (B) : $Ni_xCo_yMn_zM_t(OH)_{2+\alpha}$ (dans laquelle $x + y + z + t = 1$, $0,3 \leq x \leq 0,7$, $0,1 \leq y \leq 0,4$, $0,1 \leq z \leq 0,4$, $0 \leq t \leq 0,01$ et M est un ou plusieurs éléments sélectionnés parmi Ca, Mg, Al, Ti, V, Cr, Zr, Nb, Mo, Hf, Ta et W), un processus de mélange pour obtenir un mélange de lithium en mélangeant un composé de lithium avec les particules d'hydroxyde composite de nickel-cobalt-manganèse de manière à ce que le rapport du nombre d'atomes de lithium au nombre total d'atomes des éléments métalliques autres que le lithium soit de 0,95 à 1,20, et un processus de calcination pour obtenir des particules d'oxyde composite de lithium-nickel-cobalt-manganèse en réalisant une calcination du mélange de lithium dans une atmosphère oxydante, dans lequel la durée pour atteindre la température de calcination à partir de la température de 650 °C est de 0,5 heures à 1,5 heures, la température de calcination est de 850 °C à 1000 °C, et la température est maintenue à cette température pendant 1,0 heure à 5,0 heures.

5. Procédé de fabrication pour produire une matière active de cathode pour une batterie secondaire à électrolyte non-aqueux selon la revendication 4, dans lequel, dans le processus de calcination, la durée totale de calcination à partir du début de la montée en température jusqu'à la fin de la calcination est de 3,0 heures à 9,0 heures.

6. Procédé de fabrication pour produire une matière active de cathode pour une batterie secondaire à électrolyte non-aqueux selon la revendication 4 ou 5, dans lequel, dans le processus de cristallisation exécuté en réalisant une nucléation en ajustant la solution aqueuse de nucléation qui inclut un composé métallique et un donneur d'ions ammonium de telle sorte que le pH à une température de référence de liquide de 25 °C soit de 12,0 à 14,0, puis en engendrant une croissance des germes en ajustant la solution aqueuse de croissance des particules qui inclut les germes formés dans le processus de nucléation de telle sorte que le pH à une température de liquide de référence de 25 °C soit de 10,5 à 12,0, les particules d'hydroxyde composite de nickel-cobalt-manganèse sont obtenues de manière à ce que la granulométrie moyenne est de 3 μm à 20 μm, et les particules d'hydroxyde composites de nickel-cobalt-manganèse, dont l'indice [(d90 - d10 / granulométrie moyenne] qui indique la dispersion de la distribution granulométrique des particules secondaires est de 0,60 ou moins.

7. Procédé de fabrication pour produire une matière active de cathode pour une batterie secondaire à électrolyte non-aqueux selon l'une quelconque des revendications 4 à 6, comprenant en outre un processus de traitement thermique avant le processus de mélange pour traiter à chaud les particules d'hydroxyde composite de nickel-cobalt-manganèse à une température de 105 °C à 400 °C.

8. Procédé de fabrication pour produire une matière active de cathode pour une batterie secondaire à électrolyte non-aqueux selon l'une quelconque des revendications 4 à 7, comprenant en outre un processus de broyage pour broyer les particules d'oxyde composite de lithium-nickel-cobalt-manganèse obtenues dans le processus de calcination.

9. Batterie secondaire à électrolyte non- aqueux comprenant une cathode, une anode, un séparateur et un électrolyte non-aqueux, et qui utilise la matière active de cathode pour un électrolyte non aqueux selon l'une quelconque des revendications 1 à 4 en tant que matière de cathode de la cathode.

Fig. 1

Fig. 2

**EP 3 026 740 B1**

**Patent documents cited in the description**

- JP H05258751 A
- JP H09022693 A
- JP H08055624 A
- JP H10308218 A
- JP 2000195514 A
- JP 2013051772 A
- JP 2013051172 A
- WO 2011074058 A1